**Europäisches Patentamt**

**European Patent Office**

**Office européen des brevets**

(11) Veröffentlichungsnummer: **0 123 138**
**B1**

# (12) EUROPÄISCHE PATENTSCHRIFT

(45) Veröffentlichungstag der Patentschrift:
**18.03.87**

(21) Anmeldenummer: **84103098.4**

(22) Anmeldetag: **21.03.84**

(51) Int. Cl.⁴: **B 22 D 11/16,** B 22 D 41/08,
G 05 D 27/02

(54) Verfahren und Vorrichtung zum Steuern einer Stranggiessanlage.

(30) Priorität: **29.03.83 CH 1724/83**

(43) Veröffentlichungstag der Anmeldung:
**31.10.84 Patentblatt 84/44**

(45) Bekanntmachung des Hinweises auf die Patenterteilung:
**18.03.87 Patentblatt 87/12**

(84) Benannte Vertragsstaaten:
**AT BE DE FR GB IT LU NL**

(56) Entgegenhaltungen:
**EP-A-0 019 114**
**CH-A-430 066**
**DE-A-2 850 241**
**DE-B-2 435 485**

(73) Patentinhaber: **Metacon AG, Oerlikonerstrasse 88,
CH- 8057 Zürich (CH)**

(72) Erfinder: **Tinnes, Bernhard, In der Hauswiese 5,
CH- 8125 Zollikerberg (CH)**
Erfinder: **Kreuzberg, Heinz, Josef Decker Strasse
8, D-8214 Bernau (DE)**

(74) Vertreter: **Patentanwälte Schaad, Balass &
Partner, Dufourstrasse 101 Postfach, CH- 8034
Zürich (CH)**

EP 0 123 138 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Gegenstand der Anmeldung ist ein Verfahren zum Steuern einer Stranggiessanlage nach dem Oberbegriff von Anspruch 1. Es sind schon Verfahren und Vorrichtung bekannt, die zum Ziele haben, beim Auftreten von Störungen im Betrieb geeignete Massnahmen automatisch auszulösen. Im Zusammenhang mit der Automatisierung von Stranggussanlagen sind auch Steuerungen bekannt geworden, welche auch einen Durchbruch erfassen sollen. Dementsprechend weisen diese Steuerungen der Kokille oder dem Strang zugeordnete Überwachungsorgane auf, wobei bestimmte, von diesen gelieferte Signale von der Steuerung als Indiz für einen Durchbruch ausgewertet werden.

So ist aus der die Merkmale der Oberbegriffe der unabhängigen Ansprüche enthaltenden CH-PS 430,066 eine Steuerung bekannt, bei welcher das Absinken des Badspiegels von einem ersten, unterhalb der Sollhöhe liegenden Niveau auf ein zweites Niveau dann als Durchbruch gewertet wird, wenn vorbestimmte Signale entsprechender, die Zufuhr überwachender Niveauschranken sich innerhalb einer vorbestimmten Zeit folgen. Die Zeit wird dabei in Abhängigkeit von der Ausziehgeschwindigkeit des Stranges bestimmt.

Im Rahmen der Überwachung auf Störungen der Stranggiessanlage, die ein Absinken des Badspiegels zur Folge haben, umfasst die bekannte Steuerung auch Mittel, um durch Ueberwachung der Grösse des Giessstrahls einen Mangel an Metallzufuhr in die Kokille von einem Durchbruch unterscheidbar zu machen. Zur Bestimmung der Giesstrahlgrösse ist oberhalb der Kokille entweder ein auf Lichtemissionen des Gießstrahls ansprechendes Pyrometer oder eine durch die Wirbelstromverluste im flüssigen Metall beeinflusste Magnetisierungsspule angebracht. Das entsprechende Signal wird als Mangelsignal ausgewertet, wenn dieses auch nach einer die Öffnungszeit des Schieber berücksichtigenden Verzögerungszeit unter einem vorbestimmten Schwellwert bleibt, der für den vollständig geöffneten Schieber der Anlage einer minimal zulässigen Giesstrahlgrösse entspricht.

Die bekannten Steuerungen haben den Nachteil, dass der Durchbruch gross sein muss, damit aus signifikanten Änderungen der überwachten Parameter ein entsprechendes eindeutiges Signal erzeugt werden kann. Mithin ist der Schaden an der Anlage, der durch die ausfliessende Schmelze verursacht wird, bis insbesondere die Zufuhr von Schmelze in die Kokille unterbrochen ist, erheblich.

Die Erfindung beruht auf der Erkenntnis, dass eigentliche Durchbrüche am Strang in der Regel als sogenanntes Bleeding, d.h. als kleines Rinnsal entstehen, das aus einer fehlerhaften Stelle der Kruste entweicht. Tritt eine zunehmend grössere Menge von Schmelze aus dem Strang aus, so ist mit einem eigentlichen Durchbruch mit grosser Wahrscheinlichkeit zu rechnen.

Im Falle einer auf Badspiegelüberwachung beruhenden Durchbruchserkennung wirkt die automatische Badspiegelregulierung einer Erkennung eines sich abzeichnenden, eigentlichen Durchbruches entgegen. Tritt nämlich aus dem Strang Schmelze aus, so wird der Kokille zur Kompensation des tendenziell absinkenden Badspiegels eine vergrösserte Schmelzenmenge zugeführt. Soweit und solange die maximale Zufuhrleistung der Anlage nicht erreicht ist, sinkt der Badspiegel auch dann noch nicht dauernd ab, wenn sich der Durchbruch weiter vergrössert. Demnach bleibt der Durchbruch unentdeckt, bis dieser ein solches Mass angenommen hat, dass auch die maximale Zufuhrleistung nicht mehr ausreicht, um das dauernde Absinken des Badspiegels zu verhindern und bis - im Falle der bekannten Steuerung - der Badspiegel auch das zweite Niveau erreicht hat.

Die vorstehend dargelegten Erkenntnisse schliessen die Einsicht mit ein, dass die Dimensionierung der für die Zufuhr von Schmelze verantwortlichen Teile, z.B. des Schiebers, bzw. seines maximalen Durchflussquerschnittes in der Regel ohnehin so gewählt ist, dass die im Normalbetrieb zugeführte Schmelzenmenge weniger als 50% der maximalen Menge ausmacht.

Ausgehend von diesen Erkenntnissen besteht die Aufgabe der Erfindung in der Schaffung eines Verfahrens der, eingangs genannten A, t welches auch kleinere Durchbrüche unter Umgehung des Einflusses der automatischen Badspiegelregulierung frühzeitig erkennbar macht. Die erfindungsgemässe Lösung erfolgt durch die Verfahrensmassnahmen nach dem Kennzeichen von Anspruch 1.

Die erfindungsgemässe Lösung trägt der Tatsache Rechnung, dass die Zufuhr von Schmelze beim Auftreten eines Durchbruches eine Veränderung erfahren muss, die nach ihrem Verlauf von durch andere Ursachen bedingten Veränderungen unterscheidbar ist.

Gegenüber bekannten Verfahren der gattungsgemässen Art hat das erfindungsgemässe Verfahren den Vorteil, dass es auch kleinere Durchbrüche, d.h. Durchbrüche, deren Menge unterhalb der minimalen Zufuhrmenge bei voll geöffnetem Regulierorgan, z.B. Regelschieber, liegt, in einem früheren Zeitpunkt erkennbar macht, d.h. nicht erst dann, wenn zur Konstanthaltung der Badspiegelhöhe in der Kokille die Zufuhr von Schmelze nicht mehr oder nicht mehr in ausreichendem Mass gesteigert werden kann und der Badspiegel daraufhin um ein signifikantes Mass abgesunken ist.

In besonders einfacher und vorteilhafter Weise lässt sich das erfindungsgemässe Verfahren dadurch realisieren, dass die Überwachung der Mengenänderungen der Zufuhr durch Überwachung der Stellungsänderungen eines der Kokille unmittelbar vorgeschalteten Regelschiebers erfolgt. Wird auf das Mass der Schieberverstellung in Öffnungsrichtung sowie den zeitlichen Verlauf dieser sich aus der automatischen Gießspiegelregulierung ergebenden Bewegung abgestellt, so wirkt sich die Gießspiegelregulierung demnach nicht nur nicht nachteilig aus, sondern sie wird vorteilhaft ausgenutzt.

Zwar ist die Schieberstellung für die absolute Grösse der zufliessenden Schmelzenmenge unter Berücksichtigung der bekannten, sich ändernden Giessparameter und Störeinflüssen am Schieberdurchlass kein sinnvolles Mass. Die Erfassung der Veränderungen der Schieberstellung lässt hingegen unter Hinzuziehung des zeitlichen Verlaufes die Ursache für eine Vergrösserung der zugeführten Schmelzenmenge in der Regel genügend deutlich interpretieren und damit für die Erkennung von Durchbrüchen in einem frühen Stadium auswerten.

Gemäss einer weiteren bevorzugten Ausgestaltung des Verfahrens wird die Abzugsgeschwindigkeit des Stranges z.B. durch laufende Überwachung derselben mindestens insoweit für die Bestimmung eines Durchbruchszustandes herangezogen, als diese Abzugsgeschwindigkeit vergrössert wird und damit für ein Ansteigen der zugeführten Schmelzenmenge zur Kokille verantwortlich ist.

Es ist weiterhin vorteilhaft, wenn in weiterer Ausgestaltung des erfindungsgemässen Verfahrens die Veränderungen in der Höhe des Badspiegels in der Kokille für die Bestimmung des Durchbruchszustandes ebenfalls herangezogen werden.

Die Erfindung betrifft auch eine Vorrichtung zur Durchführung des Verfahrens, die sich durch die Merkmale von Anspruch 5 auszeichnet.

Der Vollständigkeit halber sei darauf hingewiesen, dass die Veränderung der zugeführten Schmelzenmenge im Rahmen des erfindungsgemässen Verfahrens grundsätzlich auch in anderer Weise als durch Überwachung und Auswertung der Stellungsänderungen eines Schiebers an einem Zwischengefäss erfasst werden kann. Überraschend ist aber, dass die Durchführung des Verfahrens mit der erfindungsgemässen Vorrichtung durch die Erfassung der Änderungen der Schieberstellungen genauer und damit zuverlässiger die Änderungen der Schmelzenmenge abbilden lässt und somit für die Durchbrucherkennung nach dem erfindungsgemässen Verfahren besonders gut geeignet ist.

Eine beispielsweise Ausführungsform des erfindungsgemässen Verfahrens ist anhand der Zeichnung nachfolgend erläutert, in welcher die erfindungsgemässe Vorrichtung zur Durchführung des Verfahrens beispielhaft dargestellt ist. Es zeigen:

Fig. 1 eine schematische Darstellung einer mit der Vorrichtung ausgerüsteten Stranggiessanlage, und

Fig. 2 ein Prinzipschema einer der Vorrichtung angehörenden Auswert-Schaltung.

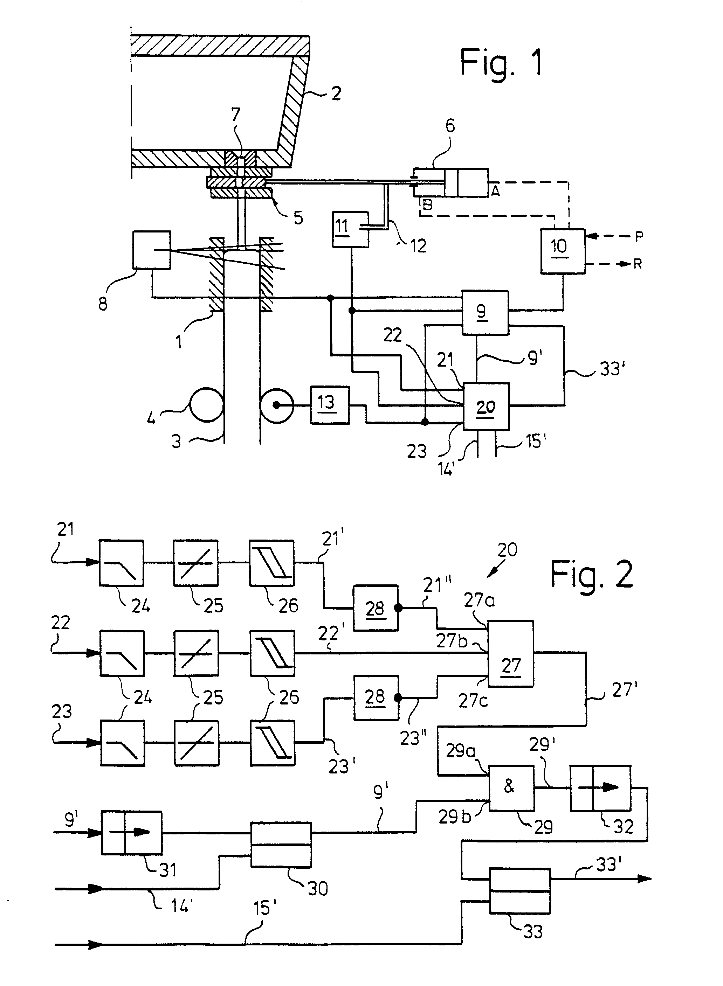

Mit 1 ist in Fig. 1 eine Stranggiesskokille bezeichnet, welche aus einem Zwischengefäss 2 mit metallischer Schmelze, z.B. Stahl, beliefert wird. Aus der Kokille 1 wird ein Strang 3 durch Ausziehwalzen 4 ausgezogen, wobei dem Strang unterhalb der Kokille bekannte, nicht dargestellte Kühl- und Stützeinrichtungen zugeordnet sind.

Ein von einem Stellantrieb 6 betätigter Regelschieber 5, der am Zwischengefäss 2 angebracht ist, beherrscht dessen Ausflussöffnung 7 und bestimmt die in die Kokille 1 fliessende Schmelzenmenge. Der Kokille 1 ist eine z.B. auf radioaktive Strahlung ansprechende Messeinrichtung 8 zugeordnet, die ein dem Istwert des Füllstandes der Schmelze in der Kokille analoges Signal liefert. Eine Regelschaltung 9 vergleicht dieses Signal mit einem Sollwert für den Füllstand und erzeugt beim Vorliegen einer massgeblichen Abweichung ein der Richtung der Abweichung entsprechendes Steuersignal zur Betätigung eines auf das Stellglied 6 einwirkenden Servoelementes 10. Dementsprechend erfolgt eine Betätigung des Schiebers 5 zur Veränderung der Zuflussmenge bis die Messeinrichtung 8 wieder ein Istwert-Signal liefert, das dem Sollwert entspricht. Dabei stehen der Regelschaltung 9 die Signale eines Weggebers 11 zur Verfügung der dem Schieber 5, bzw. seinem Stellantrieb 6 zugeordnet ist und durch entsprechende Analogsignale die jeweilige Stellung des beweglichen Schieberteiles über die bei 12 angedeutete mechanische Verbindung abbildet. Schliesslich werden der Regelschaltung 9 auch Signale eines Tachogenerators 13 zugeführt. Eine der Ausziehwalzen 4 ist mit dem Tachogenerator 13 gekuppelt und treibt diesen entsprechend der Ausziehgeschwindigkeit des Stranges 3 aus der Kokille 1 an.

Erfindungsgemäss weist die dargestellte Steuervorrichtung Mittel zur Erzeugung eines Durchbruchsignales auf, die eine Auswertschaltung 20 umfassen. Wie im Zusammenhang mit Fig.2 noch näher dargelegt werden wird, verarbeitet die Auswertschaltung 20 Signale, die dieser von mehreren Quellen zugeführt werden und erzeugt daraus unter bestimmten Voraussetzungen das Durchbruchsignal. Neben einem Eingang 21 der ebenfalls mit der Messeinrichtung 8 in Verbindung steht, werden der Schaltung 20 an einem weiteren Eingang 22 Signale des Weggebers 11 zugeführt. Schliesslich ist ein Eingang 23 mit dem Tachogenerator 13 verbunden.

Die Auswertschaltung 20 (Figur 2) ist aus an sich bekannten Schaltungselementen aufgebaut. Für alle Eingänge 21, 22 und 23 umfasst sie je einen Filter 24, z.B. einen Tiefpass-Filter, diesem nachgeschaltet ein nach der Zeit differenzierendes Glied 25, sowie einen Schwellwertschalter 26. Während alle Schwellwertschalter mit je einem Eingang eines logischen UND-Gatters 27 verbunden sind, werden die von den Schwellwertschalter erzeugten digitalen Signale 21' und 23' über je ein logisches Inversionsglied 28, das Signal 22' hingegen unmittelbar an das mit diesen zusammen ein Summierglied bildende logische UND-Gatter 27 geführt. Der Ausgang des UND-Gatters 27 ist mit einem weiteren logischen UND-Gatter 29 verbunden dessen weiterer Eingang 29 b mit einer bi-stabilem Kippschaltung 30 in Verbindung steht. Die Kippschaltung 30 wird einerseits durch digitale Signale 9' von der Regelschaltung 9 über ein Verzögerungsglied 31 und andererseits durch ein digitales Signal 14', welches durch nicht dargestellte Organe bei Beendigung des Giessvorganges ausgelöst wird, beeinflusst. Der Ausgang des UND-Gatters 29 ist über ein weiteres Verzögerungsglied 32 mit einer weiteren bi-stabilen Kippschaltung 30 verbunden, dem andererseits ein digitales Rückstellsignal 15' zugeführt werden kann. Wie aus Figur 1 ersichtlich ist, wird das Signal 33' der Regelschaltung 9 zugeführt, das seinerseits über das Servoelement 10 auf den Stellantrieb 6 einwirkt.

Mit Beginn des Giessvorganges liefert die Regelschaltung 9 digitale Signale 9' an die Auswertschaltung 20, wobei diese Signale über das Verzögerungsglied 31 und die Kippschaltung 30 dem Eingang 29b des UND-Gatters 29 zugeführt werden, so dass an diesem Eingang der Signalzustand "1" herrscht.

Andererseits werden im Giessbetrieb die analogen Signale der Geber 8, 11 und 13 über die Eingänge 21, 22 und 23 den Tiefpass-Filtern 24, z.B. einstufigen Filter mit 20 dB pro Dekade und einer Zeitkonstante von 700 ms, zugeführt. Aus den von den hochfrequenten Anteilen befreiten Signalen wird in den Differenziergliedern 25 die erste Ableitung gebildet und den Schwellwertschaltern 26 vorgelegt. Erfassen die Geber keine Veränderungen oder laufen diese Änderungen langsam ab, so sprechen die Schwellwertschalter nicht an. Dementsprechend herrscht am Eingang 27b des UND-Gatters 27 der Signalzustand "0" während dem an den Eingängen 27a und 27c der Signalzustand "1" besteht. In diesem Zustand bildet somit das Signal 27' am Eingang 29a des UND-Gatters 29 den Signalzustand "0" ab. Dementsprechend repräsentieren auch die Signale 29' und 33' im normalen Betrieb der Stranggiessanlage logisch "0". Erscheint am Eingang 22 ein vom Weggeber 11 erzeugtes Signal, dessen erste Ableitung nach Grösse und Vorzeichen den am Schwellwertschalter 26 eingestellten Wert erreicht oder diesen Wert überschreitet, so entsteht am Eingang 27b des UND-Gatters 27 der Signalzustand "1". Dieser Signalzustand repräsentiert eine durch ein relativ rasches Öffnen des Schiebers bewirkte relativ rasche Zunahme der zugeführten Schmelzenmenge. Ist diese Änderung des Signalzustandes am UND-Gatter 27 von keiner Änderung des Signalzustandes an den Eingängen 27a oder 27c begleitet, so bedeutet dies, dass weder der Füllstand noch die Abzugsgeschwindigkeit eine signifikante Änderung erfahren, welche das Signal des Weggebers 11 als normale Regelbewegung des Schiebers erklären lassen.

Da mit der Änderung des Signalzustandes auf logisch "1" am Eingang 27b an allen Eingängen der gleiche Signalzustand vorliegt, schaltet das UND-Gatter 27 durch und das signal 27' wird ebenfalls logisch "1". Entsprechend herrscht auch an den beiden Eingängen 29a und 29b der Signalzustand "1" und das Ausgangssignal 29' wird logisch "1". Hält dieses Signal über die Verzögerungszeit des Verzögerungsgliedes 32 an, so wird auch das Signal auf 33' logisch "1" und über die Regelschaltung 9 erhält das Servoelement 10 den Befehl zum sofortigen Schliessen des Schiebers 5 über den Stellantrieb 6.

Die Auswertschaltung 20 hat mithin ein Durchbruch am Strang signalisiert bevor der Füllstand in der Kokille in signifikanter Weise gefallen ist. Dabei ist allerdings zu berücksichtigen, dass die Regelschaltung 9 aufgrund eines Signales des Messgerätes 8 den Schieber 5 schon veranlasst hat, durch Vergrösserung des Durchflussquerschnittes die Zufuhr zu vergrössern um eine noch geringfügige Differenz zwischen dem Sollwert des Füllstandes und dessen Istwert auszugleichen. Das Signal des Messgerätes 8, das auch an dem mit dem Eingang 21 verbundenen Differenzierglied 25 erschienen ist, hat jedoch den zugehörigen Schwellwertschalter 26 nicht zum ansprechen gebracht. Davon abgesehen, dass das vom Differenzierglied erzeugte Signal nach seinem absoluten Wert nicht ausreichte, um den Schwellwertschalter zum Ansprechen zu bringen, hatte dieses Signal auch nicht das zutreffende Vorzeichen.

Schaltet einer der mit den Eingängen 21 oder 23 verbundenen Schwellwertschalter 26, weil die Abzugsgeschwindigkeit des Stranges 5 zunimmt, oder weil der Füllstand in der Kokille steigt, so ändert sich der Signalzustand am Eingang 27c bzw. 27a des UND-Gatters 27 von logisch "1" auf logisch "0". DDie Änderung des Signalzustandes am Eingang 27b dieses Gatters, bedingt durch die Arbeitsweise der Regelschaltung 9, die eine Öffnungsbewegung des Regelschiebers 5 ausgelöst hat, wird somit von dem als Summierungsglied wirkenden UND-Gatter 27 nicht als Durchbruchsignal ausgewertet.

Während bei der vorstehend beschriebenen und in Figur 2 dargestellten Ausgestaltung der Auswertschaltung 20 die Signale der Geber 8 und 13 bei Füllstandsänderungen und Änderungen der Abzugsgeschwindigkeit über eine logische Verriegelung am UND-Gatter 27 blockiert werden, ist auch eine Ausgestaltung dieser Auswertschaltung denkbar, die alle dynamischen Vorgänge entsprechend ihren Einfluss auf die Schieberstellung berücksichtigt. Dies ist entweder in der Weise möglich, dass die Signale der mit den Eingängen 21 und 23 verbundenen Differenzierglieder nicht nur ihrem eigenen Schwellwertschalter sondern auch dem mit dem Eingang 22 verbundenen Schwellwertschalter zugeführt werden und dessen Schwellwert entsprechend den erhaltenen Signalen laufend verändern. Es ist aber auch möglich, die Signale aller Differenzierglieder einem gemeinsamen Summations-Rechenverstärker zuzuführen, der seinerseits einen einzigen Schwellwertschalter zum Ansprechen bringt, wenn das erhaltene analoge Signal einen Durchbruch abbildet.

**Patentansprüche**

1. Verfahren zum Steuern einer Stranggiessanlage, bei welchem der Füllstand in der Kokille (1) überwacht und die zugeführte Schmelzenmenge zur Konstanthaltung des Füllstandes geregelt wird und bei welchem die Zufuhr an Schmelze inbezug auf Mengenänderungen überwacht wird, dadurch gekennzeichnet, dass der zeitliche Verlauf einer Zunahme der Menge festgestellt und ein Durchbruchsignal dann erzeugt wird, wenn diese Menge rascher als in einem vorbestimmten Mass zunimmt.

2. Verfahren nach Anspruch 1, dadurch gekennzeichnet, dass die Überwachung der Mengenänderungen der Zufuhr durch Überwachung der Stellungsänderungen eines der Kokille (1) unmittelbar vorgeschalteten Regelschiebers (5) erfolgt.

3. Verfahren nach Anspruch 1 oder 2, dadurch gekennzeichnet, dass die Abzugsgeschwindigkeit überwacht und für die Erfassung des Durchbruchszustandes herangezogen wird.

4. Verfahren nach einem der Ansprüche 1, 2 oder 3, dadurch gekennzeichnet, dass die Überwachung des Füllstandes in der Kokille (1) für die Erfassung des Durchbruchszustandes herangezogen wird.

5. Vorrichtung zur Durchführung des Verfahrens nach Anspruch 1, mit einem an einem Zwischengefäss (2) vorgesehenen Regelschieber (5) und einer dem Regelschieber zur Konstanthaltung des Füllstandes in der Kokille (1) steuernden Regelschaltung (10) sowie mit einer Auswertschaltung und mindestens einem mit dieser verbundenen, der Anlage zugeordneten Geber (11) für die Erzeugung eines Durchbruchsignals, dadurch gekennzeichnet, dass ein dem Regelschieber zugeordneter Weggeber (11) vorgesehen ist und die Auswertschaltung (20) ein nach der Zeit differenzierendes Glied (25) umfasst.

6. Vorrichtung nach Anspruch 5, wobei mehrere mit der Auswertschaltung (20) verbundene Geber (8, 11) vorgesehen sind, dadurch gekennzeichnet, dass ein der Kokille (1) zugeordnetes Füllstandsmessgerät (8) vorgesehen ist und die Auswertschaltung ein weiteres Differenzierglied (25) sowie ein Summierglied (27) umfasst, das an die Ausgänge der beiden Differenzierglieder gekoppelt ist.

7. Vorrichtung nach Anspruch 5 oder 6, dadurch gekennzeichnet, dass dem Strang (3) ein Tachometer (13) zugeordnet ist, der über ein weiteres Differenzierglied (25) an das Summierglied (27) gekoppelt ist.

8. Vorrichtung nach einem der Ansprüche 5, 6 oder 7, dadurch gekennzeichnet, dass jedem Differenzierglied (25) ein Schwellwertschalter (26) nachgeschaltet ist.

9. Vorrichtung nach Anspruch 6 oder 7, dadurch gekennzeichnet, dass das Summierglied (27) durch ein logisches Element gebildet ist.

10. Vorrichtung nach Anspruch 9, dadurch gekennzeichnet, dass das logische Element (27) ein UND-Gatter ist, dessen Eingängen (27a, 27c) für das Füllstandssignal und das Tachogeneratorsignal je ein Inversionsglied (28) vorgeschaltet ist.

11. Vorrichtung nach Anspruch 6 oder 7, dadurch gekennzeichnet, dass das Summierglied durch einen Summations-Rechenverstärker gebildet ist, dessen Ausgang mit einem Schwellwertschalter in Verbindung steht.

**Claims**

1. Process for controlling a continuous-casting installation, in which the filling level in the mould (1) is monitored and the quantity of melt supplied is regulated to keep the filling level constant, and in which the supply of melt is monitored for changes in rate, characterized in that the trend in time of an increase in rate is detected, and a break-out signal is generated when this rate increases more rapidly than the predetermined rate.

2. Process according to Claim 1, characterized in that the monitoring of changes in the rate supplied is carried out by monitoring the changes in position of a regulating slide (5) located directly in front of the mould (1).

3. Process according to Claim 1 or 2, characterized in that the draw-off speed is monitored and is used to detect the break-out state.

4. Process according to one of Claims 1, 2 or 3, characterized in that the monitoring of the filling level in the mould (1) is used to detect the break-out state.

5. Apparatus for carrying out the process according to Claim 1, with a regulating slide (5) provided on a tundish (2), with a regulating circuit (10) controlling the regulating slide to keep the filling level in the mould (1) constant, and with an evelution circuit and at least one transmitter (11) which is connected to the latter and is assigned to the installation and which generates a break-out signal, characterized in that a displacement transmitter (11) assigned to the regulating slide is provided and the evaluation circuit (20) includes an element (25) which differentiates with respect to time.

6. Apparatus according to Claim 5, in which several transmitters (8, 11) connected to the evaluation circuit (20) are provided, characterized in that a filling-level meter (8) assigned to the mould (1) is provided, and the evaluation circuit includes a further differentiating element (25) and a summing element (27) which is coupled to the outputs of the two differentiating elements.

7. Apparatus according to Claim 5 or 6, characterized in that a tachometer (13) is assigned to the billet (3) and is coupled to the summing element (27) via a further differentiating element (25).

8. Apparatus according to one of Claims 5, 6 or 7, characterized in that a threshold switch (26) is provided after each differentiating element (25).

9. Apparatus according to Claim 6 or 7, characterized in that the summing element (27) is formed by a logic element.

10. Apparatus according to Claim 9, characterized in that the logic element (27) is an AND-Gate, of which each of the inputs (27a, 27c) for the filling-level signal and the tachometer signal is preceded by an inversion element (28).

11. Apparatus according to Claim 6 or 7, characterized in that the summing element is formed by a summation operational amplifier, the output of which is connected to a threshold switch.

## Revendications

1. Procédé pour commender une installation de coulée continue, selon lequel le niveau de remplissage dans la lingotière (1) est contrôlé et le débit de métal liquide amené est réglé pour maintenir le niveau constant, et selon lequel on contrôle les variations de débit du métal liquide amené, caractérisé en ce que le déroulement dans le temps d'un accroissement du débit est constaté et un signal de rupture est alors produit si ce débit augmente plus vite que la valeur prédéterminée.

2. Procédé selon la revendication 1, caractérisé en ce que le contrôle des variations du débit d'alimentation s'effectue par le contrôle des variations de position d'un tiroir de régulation (5) monté immédiatement avant la lingotière (1).

3. Procédé selon la revendication 1 ou 2, caractérisé en ce que la vitesse d'extraction est contrôlée et utilisés pour la saisie de l'état de rupture.

4. Procédé selon l'une des revendications 1, 2 ou 3, caractérisé en ce que le contrôle du niveau de remplissage dans la lingotière (1) est utilisé pour saisir l'état de rupture.

5. Dispositif pour mettre en oeuvre le procédé selon la revendication 1, comportant un tiroir de régulation (5) prévu sur un panier de coulée (2) et un circuit de régulation (10) commandant le tiroir de régulation pour maintenir constant le niveau dans la lingotière (1), ainsi qu'un circuit d'évaluation et au moins un générateur de signaux (11) relié à celui-ci et associé à l'installation pour produire un signal de rupture, caractérisé en ce qu'on prévoit un capteur (11) associé au tiroir de régulation (5) et que le circuit d'évaluation (20) comporte un élément différenciateur en fonction du temps (25).

6. Dispositif selon la revendication 5, dans lequel on prévoit plusieurs générateurs de signaux (8, 11) reliés au circuit d'évaluation, caractérisé en ce qu'on prévoit un appareil de mesure du niveau de remplissage (8) associé à la lingotière (1) et que le circuit d'évaluation comporte un autre élément différenciateur (25), ainsi qu'un élément additionneur (27) qui est couplé aux sorties des deux éléments différenciateurs.

7. Dispositif selon la revendication 5 ou 6, caractérisé en ce qu'on associe à la billette (3) un tachymètre (13) qui est couplé à l'élément additionneur (27) par un autre élément différenciateur (25)

8. Dispositif selon l'une des revendications 5, 6 ou 7, caractérisé en ce qu'un interrupteur de seuil (26) est monté à la suite de chaque élément différenciateur (25).

9. Dispositif selon l'une des revendications 5, 6 ou 7, caractérisé en ce que l'élément additionneur (27) est constitué par un élément logique.

10. Dispositif selon la revendication 9, caractérisé en ce que l'élément logique (27) est une porte ET avant les entrées (27a, 27c) de laquelle est monté un élément inversant (28) pour le signal du niveau de remplissage et le signal de la génératrice tachymétrique.

11. Dispositif selon la revendication 6 ou 7, caractérisé en ce que l'élément additionneur est constitué par un amplificateur d'addition et de calcul dont la sortie est reliée à un interrupteur de seuil.

Fig. 1

Fig. 2